# EUROPÄISCHE PATENTANMELDUNG

(11) **EP 1 669 016 A2**
(43) Veröffentlichungstag der Anmeldung: **14.06.2006**
(21) Anmeldenummer: 05001232.7
(22) Anmeldetag: 21.01.2005
(51) Int. Cl.: A47L 13/26

(54) **Fussmatte mit Griff**

(30) Priorität: 08.12.2004 DE 202004019017 U
(71) Anmelder: Laupheimer Kokosweberei (LAKO), 88471 Laupheim (DE)
(72) Erfinder: Braunmiller, Knut, 88471 Laupheim (DE); Keil, Ralf, 88471 Laupheim (DE)
(74) Vertreter: Kirschner, Klaus Dieter

(57) **Zusammenfassung**

Die erfindungsgemäße Fußmatte (1) weist eine Fußabtretfläche (2) auf, an deren Längs- oder Querseite wenigstens ein Griff (3) vorgesehen ist

## Beschreibung

Die Erfindung betrifft eine Fußmatte mit Griff.

Im Stand der Technik sind Fußmatten bekannt, die üblicherweise vor den Eingang eines Hauses oder einer Wohnung gelegt werden und an denen Personen, die in das Haus oder in die Wohnung eintreten, ihre Schuhe abtreten und säubern können, um zu verhindern, dass das Haus oder die Wohnung verunreinigt wird.

Des weiteren sind Fußmatten bspw. für Kraftfahrzeuge bekannt, die in den Fußraum von Kraftfahrzeugen gelegt werden und die den Schmutz von den Schuhen des Fahrers oder der Beifahrer aufnehmen und somit verhindern, dass das Fahrzeug verunreinigt wird.

Solche Fußmatten können vom Hersteller auf Messen und vom Händler in seinen Verkaufsräumen bislang nur unzureichend präsentiert werden. Des weiteren gestaltet sich der Transport von solchen Fußmatten als problematisch und als unangenehm.

Es ist daher Aufgabe der vorliegenden Erfindung, die Präsentationsmöglichkeiten sowie den Transport von Fußmatten zu verbessem.

Diese Aufgaben werden mit dem Gegenstand des unabhängigen Schutzanspruchs 1 gelöst. Vorteilhafte Weiterbildungen der Erfindung ergeben sich aus den Unteransprüchen.

Die erfindungsgemäße Aufgabe wird durch eine Fußmatte mit einer Fußabtretfläche gelöst, an deren Längs- oder Querseite wenigstens ein Griff vorgesehen ist. Dieser Griff kann fest, abschneidbar oder abtrennbar mit der Fußabtrittfläche verbunden sein. Gemäß einem Grundgedanken der Erfindung kann die Fußmatte mit diesem Griff einfach transportiert und für Präsentationszwecke vorteilhaft auf einer Stange oder in einem Regal mit entsprechenden Aufhängungsmitteln bspw. Haken aufgehängt werden. Zusätzliche Kosten sowie eine unnötige Umweltbelastung durch entstehenden Abfall durch eine separate Verpackung bspw. eine transparente Plastiktüte mit zusätzlichem Griff können dadurch vermieden werden.

Solche Fußmatten können als Fußmatten bzw. Fußabstreifer für Eingangstüren von Wohnungen oder Häusern oder als Fußmatten für Kraftfahrzeuge ausgeführt werden.

Gemäß einer ersten bevorzugten Ausführungsform ist nur ein Griff vorgesehen, es ist jedoch ebenfalls möglich, zwei oder mehrere Griffe an der Fußabtretfläche anzuordnen.

Gemäß einer weiteren Ausführungsform der Fußmatte ist zwischen der Fußabtretfläche und dem Griff eine Stanzung bzw. Perforation vorgesehen. Diese Stanzung kann durch Abschneiden oder Abreißen des Griffs durchtrennt und die Fußmatte somit auf einfache und zuverlässige Weise für ihren Einsatzzweck angepasst werden. Durch eine derartige Stanzung wird sichergestellt, dass eine saubere Längs- oder Querseite an derjenigen Stelle entsteht, an welcher der Griff abgetrennt wird und dort keine Materialreste übrig bleiben.

Gemäß einer weiteren Ausführungsform der Fußmatte sind die Fußabtretfläche und der Griff komplett aus einem Stück des Grundmaterials gestanzt. Dies ist ein besonders einfaches und kostengünstiges Herstellungsverfahren.

Gemäß weiteren Ausführungsformen der Fußmatte ist der Griff als halbrunder Einschnitt oder als eine innerhalb der Fußabtretfläche vorgesehene Aussparung ausgebildet. Ein derartiger Griff bleibt vorteilhafterweise stets mit der Fußabtretfläche verbunden, somit kann die Fußmatte stets einfach transportiert werden, ohne daß eine zusätzliche Tasche oder Tüte vorgesehen werden muß. Wenn der Griff dabei nur einen vernachlässigbar kleinen Teil der Fußabtretfläche in Anspruch nimmt, so wird die für eine Säuberung der Schuhe zur Verfügung stehende Fußabtretfläche kaum verringert. Wenn die Aussparung gestanzt ist, so kann dies in dem gleichen Fertigungsschritt erfolgen, in dem auch die äußere Kontur der Fußabtretfläche ausgestanzt wird. Dadurch ergibt sich ein besonders einfaches und kostengünstiges Herstellungsverfahren.

Die Fußabtretfläche und/oder der Griff der erfindungsgemäßen Fußmatte kann/können vorteilhafterweise aus einem Werkstück bestehen, bspw. aus gespritztem PVC oder PP.

Die erfindungsgemäße Fußmatte kann den Schmutz von den Schuhen besonders vorteilhaft aufnehmen, wenn sie einen textilen Stoff aufweist. Für den textilen Stoff können unterschiedliche natürliche oder synthetische Rohstoff gewählt werden. Besonders vorteilhafte textile Stoffe sind Kokosfasem, Nadelfilz oder Sisal.

Eine sichere Haftung der Fußmatte auf dem Boden ist gegeben, wenn die Fußabtretfläche und/oder der Griff an ihrer Unterseite bzw. an ihrem Rücken mit einer rutschhemmenden Beschichtung, insbesondere einer Gummibeschichtung, oder mit einer rutschhemmenden Auflagefläche, insbesondere einer Gummi-Auflagefläche versehen sind. Für eine rutschhemmende Beschichtung oder rutschhemmende Auflagefläche kommen neben Gummi auch andere Materialien in Frage.

Viele natürliche Rohstoffe weisen gute rutschhemmende Eigenschaften auf, sodass für Fussmatten aus solchen natürlichen Rohstoffen keine zusätzliche rutschhemmende Beschichtung oder Auflagefläche vorgesehen zu werden braucht.

Die Erfindung ist in der Figur anhand eines Ausführungsbeispiels näher veranschaulicht.
- Figur 1: zeigt eine Draufsicht auf eine erste Fußmatte; und
- Figur 2: zeigt eine Draufsicht auf eine zweite Fußmatte.

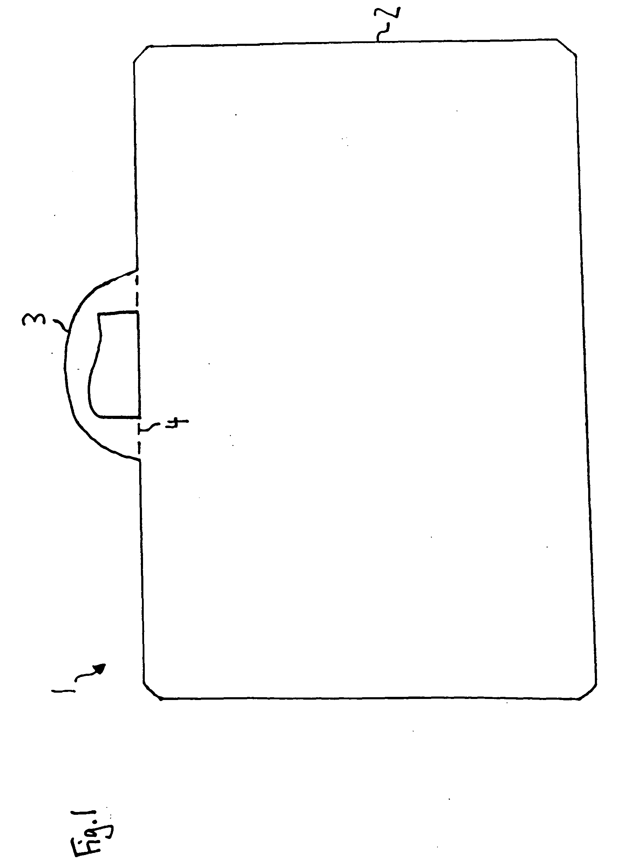

Figur 1 zeigt eine Draufsicht auf eine erste Fußmatte 1. Die erste Fußmatte 1 verfügt über eine im Wesentlichen rechteckige erste Fußabtretfläche 2, an deren oberer Längsseite mittig ein erster Griff 3 angeordnet ist. Die im Wesentlichen rechteckige Form der ersten Fußabtretfläche 2 ist hier nur beispielhaft gewählt worden. Es können beliebige andere Formen für die erste Fußabtretfläche 2 realisiert werden.

Die erste Fußabtretfläche 2 ist rechteckig mit abgeflachten Ecken und hat die Abmessungen 40 x 60 cm oder 50 x 80 cm. Es können beliebige andere Abmessungen für die erste Fußabtretfläche 2 realisiert werden. Der erste Griff 3 ist ungefähr 10 cm breit und 6 cm hoch. Sowohl die erste Fußabtretfläche 2 als auch der erste Griff 3 weisen an ihrer Oberfläche Kokosfasern auf, die den Schmutz von Straßenschuhen besonders gut aufnehmen und einfach gereinigt, bspw. ausgeklopft können. Die erste Fußabtretfläche 2 und der erste Griff 3 sind an ihrer Unterseite mit einer Gummibeschichtung versehen, die ein Verrutschen der ersten Fußmatte 1 sicher verhindert.

Zwischen der ersten Fußabtretfläche 2 und dem ersten Griff 3 ist eine Stanzung 4 vorgesehen, die bei der Fertigung der ersten Fußmatte 1 in demselben Fertigungsschritt eingebracht wird, in dem auch die Innen- und Außenkontur des ersten Griffs 3 und die Kontur der ersten Fußabtretfläche 2 gestanzt werden. Die erste Fußmatte 1 ist daher besonders kostengünstig herstellbar. Die Investitionen in die Fertigungsanlage erfordern lediglich ein neues Stanzwerkzeug.

Nach der Präsentation oder dem Transport kann der erste Griff 3 durch Auftrennen der Stanzung 4 von der ersten Fußabtretfläche 2 gelöst werden, wenn er nicht mehr benötigt wird.

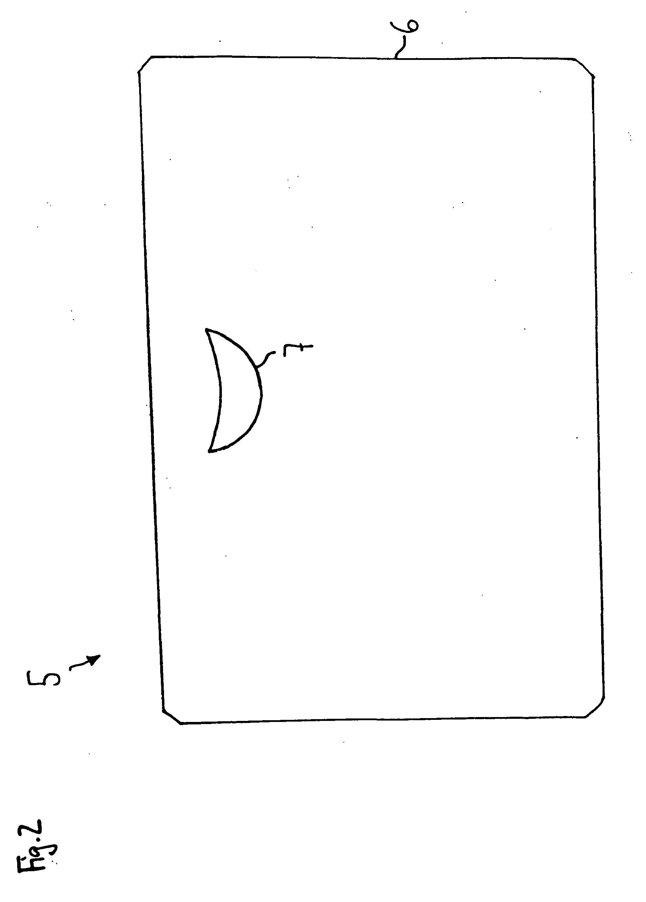

Figur 2 zeigt eine Draufsicht auf eine zweite Fußmatte 5. Die zweite Fußmatte 5 verfügt wie die erste Fußmatte 1 über eine im Wesentlichen rechteckige zweite Fußabtretfläche 6 und über einen zweiten Griff 7. Im Gegensatz zu dem ersten Griff 3 ist der zweite Griff 7 jedoch nicht abtrennbar an der oberen Längsseite angeordnet, sondem als permanente Griffmulde in der zweiten Fußabtretfläche 6 mittig nahe ihrer oberen Längsseite angeordnet. Auch die zweite Fußmatte 5 ist kostengünstig herstellbar. Die Investitionen in die Fertigungsanlage erfordern ebenfalls lediglich ein neues Stanzwerkzeug.

## Patentansprüche

1. Fußmatte mit einer Fußabtretfläche,
**dadurch gekennzeichnet, dass**
an einer Längs- oder Querseite der Fußabtretfläche (2; 6) wenigstens ein Griff (3; 7) vorgesehen ist.

2. Fußmatte nach Anspruch 1,
**dadurch gekennzeichnet, dass**
zwischen der Fußabtretfläche (2) und dem Griff (3) eine Stanzung (4) bzw. Perforation vorgesehen ist.

3. Fußmatte nach Anspruch 1 oder 2,
**dadurch gekennzeichnet, dass**
die Fußabtretfläche (2) und der Griff (3) aus einem Stück gestanzt sind.

4. Fußmatte nach Anspruch 1,
**dadurch gekennzeichnet, dass**
der Griff (7) ein halbrunder Einschnitt ist.

5. Fußmatte nach Anspruch 1,
**dadurch gekennzeichnet, dass**
der Griff (7) eine innerhalb der Fußabtretfläche (6) ausgebildete Aussparung (7) ist.

6. Fußmatte nach Anspruch 5,
**dadurch gekennzeichnet, dass**
die Aussparung (7) gestanzt ist.

7. Fußmatte nach einem der Ansprüche 1 bis 6,
**dadurch gekennzeichnet, dass**
die Fußabtretfläche (2; 6) und/oder der Griff (3; 7) aus einem Werkstück besteht.

8. Fußmatte nach einem der Ansprüche 1 bis 6,
**dadurch gekennzeichnet, dass**
die Fußabtretfläche (2; 6) und/oder der Griff (3; 7) einen textilen Stoff aufweist/aufweisen.

9. Fussmatte nach Anspruch 8,
**dadurch gekennzeichnet, dass**
der textile Stoff insbesondere aus einem natürlichen oder synthetischen Rohstoff ist, Kokosfasem, Nadelfilz oder Sisal aufweist.

10. Fussmatte nach einem der Ansprüche 1 bis 9,
**dadurch gekennzeichnet, dass**
die Fussabtretfläche (2; 6) und/oder der Griff (3; 7) an ihrer Unterseite mit einer rutschhemmenden Beschichtung, insbesondere einer Gummibeschichtung, oder mit einer rutschhemmenden Auflagefläche, insbesondere einer Gummi-Auflagefläche versehen ist/sind.
